# EUROPEAN PATENT SPECIFICATION

(11) **EP 1 419 399 B1**
(45) Date of publication and mention of the grant of the patent: **25.03.2015**
(21) Application number: 02748101.9
(22) Date of filing: 09.07.2002
(51) Int. Cl.: G01C 23/00, B63G 8/38, H04N 7/18

(54) **PHOTONIC BUOY**
PHOTONISCHE BOJE
BOUEE PHOTONIQUE

(30) Priority: 27.07.2001 US 917025
(43) Date of publication of application: 19.05.2004
(73) Proprietor: RAYTHEON COMPANY, Waltham MA 02451-1449 (US)
(72) Inventor: CROASDALE, William, Wakefield, RI 02879 (US)
(74) Representative: Jones, Graham Henry
(86) International application number: PCT/US2002/021517
(87) International publication number: WO 2003/012469

(56) References cited:
- WO-A-97/50252
- DE-A1- 2 837 134
- JP-A- 6 141 211
- US-A- 4 794 575
- US-A- 4 794 575
- US-A- 5 018 852
- US-A- 5 143 009
- US-A- 5 543 972
- US-A- 5 579 285
- US-A- 5 973 733
- US-A- 5 974 348
- US-A1- 2003 007 795
- US-B1- 6 525 762

## Description

### FIELD OF THE INVENTION

This invention relates to a system for detecting or monitoring the presence of objects on the water to, for example, ensure that a submarine does not collide with surface craft and/or is not detected by hostile forces when the submarine surfaces.

### BACKGROUND OF THE INVENTION

The transition of a submarine from deep under the ocean surface to periscope depth can place both the submarine and surface craft at risk. As evident by the incidents involving the U.S.S. Greenville and the U.S.S. Jacksonville submarines, the present procedures using passive sonar and the submarine's periscope do not always avoid submarine/surface craft collisions.

The existing practice on board U.S. submarines preparing to surface is to check for existing contacts using passive sonar. If any contacts are determined to be near the submarine and present a possibility of counter-detection or collision, no excursion is made to periscope depth. If no contacts present a risk, the submarine then proceeds to periscope depth. The primary risk to the submarine coming to periscope depth in a littoral environment is a quiet surface contact such as a fishing vessel or pleasure craft. When surface contacts are not detectable due to the silence of the contact (e.g., a sailboat) or due to water conditions (e.g., a surface layer), the submarine's first detection of a contact can very well be the moment the periscope breaks the water surface.

In the prior art, one attempt was made to produce a camera buoy launched from the submarine's three inch counter-measure launcher. The single unit was built by General Dynamics as an experimental addition to the original non-penetrating mast (NPP) digital periscope program. The system as envisioned by General Dynamics used an expendable three inch diameter buoy with a gyro-stabilized optic assembly. This attempt was unsuccessful, however, because of the very low height-of-eye of the buoy due to the weight of the mechanical image stabilization subsystem and the limitation of the package to the dimensions of an unmodified three inch launcher. Also, the very short copper wire tether used to transmit the video signal prevented full deployment of this system.

Also in the prior art, attempts were made to place a camera on a submarine aimed up at the ocean surface. This system, however, does not work when the depth of the submarine is beyond a certain limit, when the water is murky, when it is cloudy or dark, or when large waves are present on the ocean's surface.

U.S. Patent No. 4,794,575 relates to a measuring device which submerged submarines can launch in order to determine sea surface conditions prior to a missile launch. The sea state buoy 10 of the '575 patent includes a cylindrical metal body 18 connected by a long tether 28 to a motioned dampening mast 14. Body 18 includes a sensor module 90 having an accelerometer 92 to sense the vertical wave motion of the sea. A transmitter module 110 transmits displacement signal data back to a data readout unit (DRU) 38 on the submarine.

WO97/50252 relates to a land based camera configured to provide a panoramic image.

DE 28 37 134 AI discloses a buoy comprising a hull which is divided into a ballast portion for residing below the waterline, and a top portion for residing above the waterline. The buoy includes a mass in the ballast portion, and an optical bench in the top portion of the hull. A fixed vertically oriented imager is aimed at the optical device. The buoy is a round buoy which is not able to sit high in the water. This means that a good panoramic view of the horizon cannot be obtained. More specifically, the buoy is only able to obtain an above horizon view and it is not able to obtain a below horizon view. Also, the buoy is not suitable for deployment from a submarine.

### SUMMARY OF THE INVENTION

It is therefore an object of this invention to provide a deployable photonic buoy.

It is a further object of this invention to provide such a photonic buoy which prevents detection of a submarine by enemy ships and prevents submarine/surface craft collisions.

It is a further object of this invention to provide such a photonic buoy which can be used in conjunction with non-submarine environments, for example, surveillance, drug interdiction, offshore commercial venture monitoring proximate pearl farms, oil platforms, and the like, and private waterfront surveillance and monitoring applications.

It is a further object of this invention to provide such a photonic buoy which does not require and thus does not suffer from the disadvantages associated with a gyro-stabilized optics assembly.

It is a further object of this invention to provide such a photonic buoy which provides a panoramic view of the horizon.

It is a further object of this invention to provide such a photonic buoy system which provides a stable composite image of the horizon.

It is a further object of this invention to provide a photonic buoy system with a very long transmission cable tether to allow the submarine to manoeuvre freely even when the photonic buoy is deployed.

It is a further object of this invention to provide a photonic buoy which is deployable even when the submarine is fairly deep below the ocean surface.

It is a further object of this invention to provide a photonic buoy which provides a discernable panoramic view of the horizon even if the ocean water is murky, when it is cloudy or dark, and even when large waves are present on the ocean surface.

This invention results from the realization that a stable composite image representing a panoramic view of the horizon can be provided without the use of an expensive gyro-stabilized optics assembly by providing an optical bench at the top portion of an elongate buoy configured to be launched from a standard launcher and including ballast which keeps the optical bench above the waterline. The optical bench includes a fixed vertically oriented imager aimed at an optical element, for example a conical mirror or a conical prism, configured to provide a panoramic view of the horizon.

Accordingly, the present invention provides a photonic buoy comprising:
a hull which is divided into a ballast portion for residing below the waterline and a top portion for residing above the waterline;
a mass in the ballast portion; and
an optical bench in the top portion including:
   an optical device configured to provide a panoramic view of the horizon, and
   a fixed vertically oriented imager aimed at the optical device, and
characterised in that:
the hull is an elongate cylindrical hull having a diameter compatible with a launcher of a submarine whereby the photonic buoy is able to be launched from the launcher of the submarine; and
the panoramic view of the horizon provided by the optical device extends above and below horizontal.

The buoy may rotate, bob, end move to and fro in the water. A remote workstation located on board the submarine or elsewhere may be configured to compensate for all motion artifacts, to capture still frame images, and to stitch together a stable composite image. The bearing of any detected watercraft may be provided by a flux gate compass inside the photonic buoy.

The photonic buoy may comprise a transmission cable which extends from the optical bench and which is for transmitting video signals to a remote location.

In one example, the optical bench includes a conical mirror inside the top portion of the hull surrounded by a transparent wall and a vertically oriented imager aimed at the conical mirror. In another example, the optical bench includes a conical prism sealed with respect to the top of the hull and a vertically oriented imager in the hull aimed at the conical prism. In either case, the imager is typically a CCD camera and/or an infrared camera.

Typically, the photonic buoy further includes a sensor in the hull which detects the attitude of the buoy. Also, the transmission cable typically includes optical fibers and there is a converter within the buoy responsive to the imager to convert image data into optical data for transmission over the optical fibers of the transmission cable.

The photonic buoy may include a self-scuttling plug therein. The hull of the photonic buoy has a diameter compatible with the launcher of the submarine. The ballast portion typically includes a weight disposed therein and also a spool of transmission cable.

The photonic buoy of this invention may be used with a workstation remote from the hull and responsive to the optical bench. The workstation may include a display and image stabilization circuitry for presenting a composite image of the horizon on the display. The above mentioned transmission cable is able to interconnect the buoy and the workstation.

In one embodiment, the ballast portion of the hull includes a first spool of transmission cable, and the workstation is located on board a submarine which includes a second spool of the transmission cable. Typically, the image stabilization circuitry includes frame rate image processing software and hardware.

The photonic buoy of this system typically includes a vertically oriented imager in the hull and an optical element at the top portion of the hull configured to direct a panoramic view of the horizon to the vertically oriented imager. In one example, the optical element is a conical mirror. In another example, the optical element is a conical prism.

### BRIEF DESCRIPTION OF THE DRAWINGS

Other objects, features and advantages will occur to those skilled in the art from the following description of a preferred embodiment and the accompanying drawings, in which:
Fig. 1 is a schematic view depicting a submarine breaking the ocean surface;
Fig. 2 is a schematic diagram showing the primary components associated with the photonic buoy system of the subject invention;
Fig. 3 is a schematic view showing the primary components associated with the photonic buoy shown in Fig. 2 according to one embodiment of the subject invention;
Fig. 4 is a schematic view showing the primary components associated with the photonic buoy shown in Fig. 2 in accordance with another embodiment of the subject invention; and
Fig. 5 is another schematic view showing the primary components associated with the photonic buoy system of the subject invention and, in particular, showing the different motion artifact compensated images provided by the system of the subject invention.

### DISCLOSURE OF THE PREFERRED EMBODIMENT

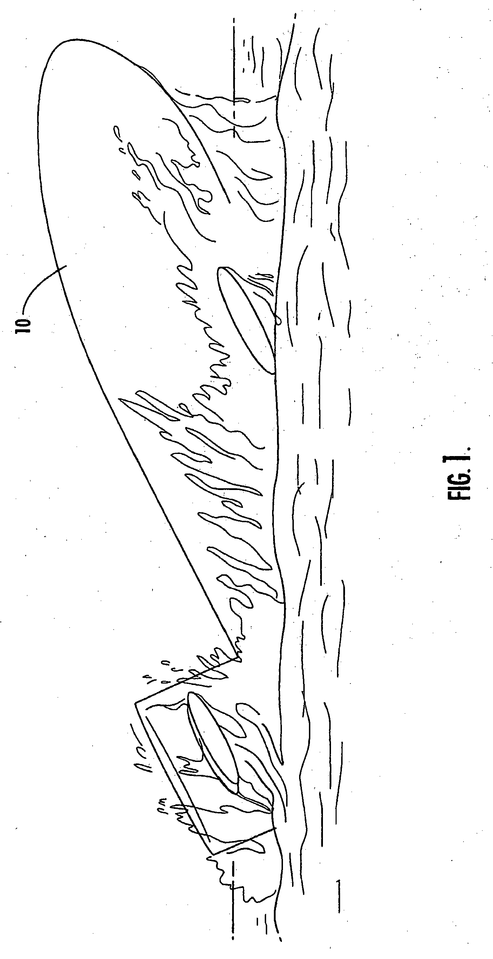

As shown in Fig. 1, when submarine 10 surfaces, it can a be fairly violent event subjecting submarine 10 and any surface craft proximate submarine 10 to damage or, worse, injury or death to the occupants of submarine 10 and/or the surface craft.

As mentioned in the Background section above, the prior art attempts to prevent such collisions and/or to prevent detection of submarine 10 have largely failed.

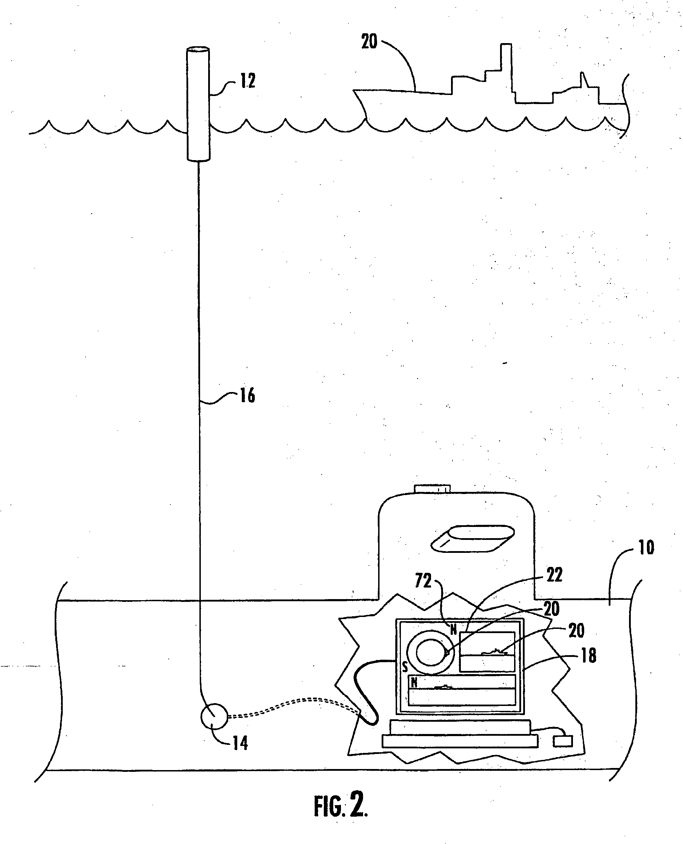

Referring to Fig. 2, in this invention, long before submarine 10, reaches periscope depth, a 4 - 6' long buoy 12 is deployed from launcher 14 of the submarine 10. The launcher 14 is typically a three inch counter measure launcher usually used to launch flares and expendable Bathythennographs (XBTs). The submarine 10 may be an attack class or Trident class submarine. The buoy 12 is tethered to the submarine 10 via a cable 16 discussed *infra* which extends through the breech door of the launcher and interconnects buoy 12 with an imaging workstation 18 on board the submarine 10.

Deployment of expendable photonic buoy 12 begins with the loading of the buoy in the submarine's existing countermeasure launcher 14. The fiber-optic cable 16 used to connect the buoy 12 to the imaging workstation 18 is fed through the breech door of the launcher and connected to the imaging workstation 18. Following the launch, the expendable photonic buoy 12 floats to the surface while paying out the fiber-optic cable. Once the buoy 12 has reached the surface, panoramic imagery (including surface ship 20) captured by the camera in the buoy 12 is transmitted over the fiber-optic cable 16 to the imaging workstation 18. Using imaging workstation 18, an operator has the ability to observe the video imagery, capture still-frame images and to mark contacts as shown at 22 in Fig. 2. Orientation of the video imagery relative to North is determined using an onboard flux gate compass. While the buoy 12 is in use, the submarine 10 is free to maneuver while paying out cable from its own spool of fiber-optic cable remaining in the launcher 14. Disposal of the photonic buoy 12 is accomplished by allowing the buoy 12 to scuttle itself at the end of an operator-selectable duration through the use of a dissolvable plug.

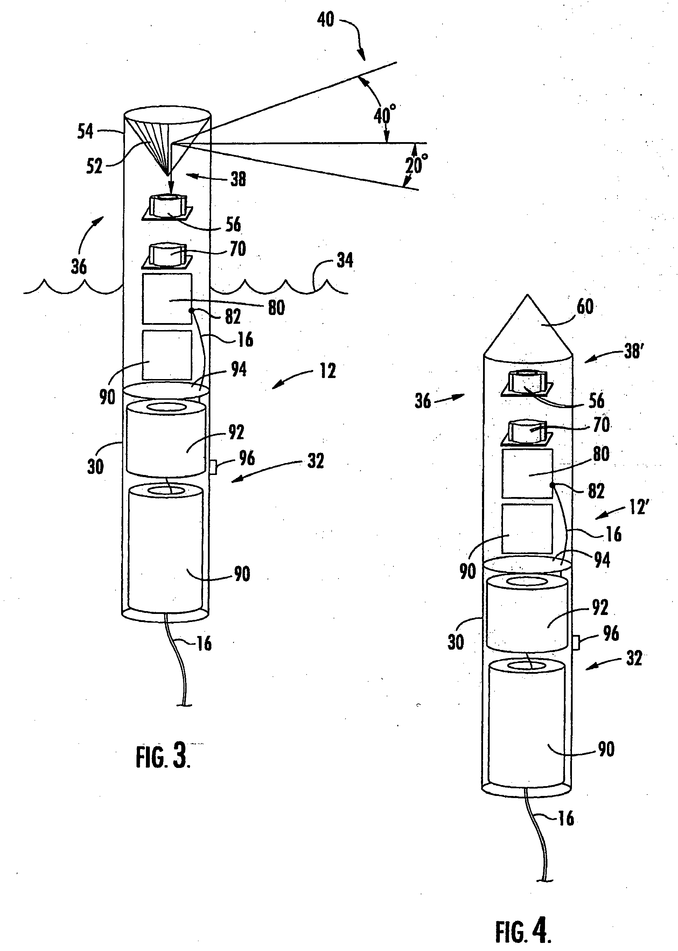

As shown in Fig. 3, the photonic buoy 12 includes a cylindrical 4' long hull 30 made of aluminum, for example, which can withstand pressures of 200 psi at a 200 ft launch depth. The hull 30 is divided into two sections or portions, namely a ballast portion 32 which resides below waterline 34 and a top portion 36 which is disposed 1¼ - 2' above waterline 34. Buoy 12 includes an optical bench 38 at the top portion 36. The optical bench 38 is configured to provide a panoramic view of the horizon as shown at 40, typically 40° above and 20° below horizontal as shown. The transmission cable 16 transmits video signals to a remote location such as the workstation 18 on board the submarine 10. In other embodiments, however, the buoy 12 shown in Fig. 3 can be anchored and used for surveillance purposes and remote communications accomplished by including a transmitter or the like on the buoy 12. Applications include surveillance of sensitive maritime environments, (e.g., coral reefs, endangered species habitats, and the like), drug interdiction, surveillance of offshore commercial ventures such as pearl farms and oil platforms, and surveillance of private waterfront properties. The photonic buoy 12 may include other types of known sensors such as acoustic and radio frequency sensors, may include a satellite up-link to provide a communications channel to the workstation 18, and can be programmed to provide continuous photographic surveillance to thereby provide photographic evidence for identification and prosecution purposes.

Optical benches 38 in Fig. 3 and 38' in Fig. 4 include an optical element configured to direct a panoramic view of the horizon to an imager. In one embodiment, the optical bench 38 in Fig. 3 includes a 45° conical mirror 52 inside the top portion 36 of the buoy 12, surrounded by and sealed with respect to a transparent glass cylinder wall 54. The conical mirror 52 may be 10mm in diameter and aluminum coated 1/8 wave. A vertically oriented imager 56 (e.g., a single board color video CCD camera, NTSC format 768 x 494 resolution) is aimed at the conical mirror 52. In some embodiments, the imager 56 may be an infrared camera for night time surveillance or two cameras may be used such for example as a CCD video camera and an infrared camera.

Referring to Fig. 4, in another embodiment, the optical bench 38' of buoy 12' includes a conical prism 60 sealed with respect to the top portion of hull 30' as shown and thus a transparent cylinder portion is not required in the hull of buoy 12'. In both embodiments, the other primary components associated with the photonic buoy of this invention are the same or similar and therefore Figs. 3 and 4 use the same reference numbers.

A sensor 70 in the hull 30, typically a flux gate compass, detects the attitude of the buoy 12 to provide orientation information of the video imagery relative to North to the workstation 18 shown in Fig. 2 via the transmission cable 16 as shown at 72. In the preferred embodiment, the cable 14 includes optical fibers and thus the buoys 12, 12' shown in Figs. 3 and 4 include a converter 80 which converts image data captured by the imager 56 to optical data which is transmitted over the optical fibers in the cable 16 connected to the converter 80 as shown at 82. In one example, the converter 80 is a NTSC to fiber encoder/decoder available from the Blackbox Corporation under the trade name "FiberPath".

A power source 90 (e.g., a 12 volt battery) provides power for the converter 80, a compass 70, and the imager 56, e.g. a camera 56.

The ballast portion 32 of the buoy 12 typically includes a weight 90 and a cable spool 92 disposed below a bulkhead 94. A self-scuttling plug 96 dissolves or erodes after a predetermined time period in water, and thus the ballast portion 32 is able to fill with water and the buoy 12 is able to sink.

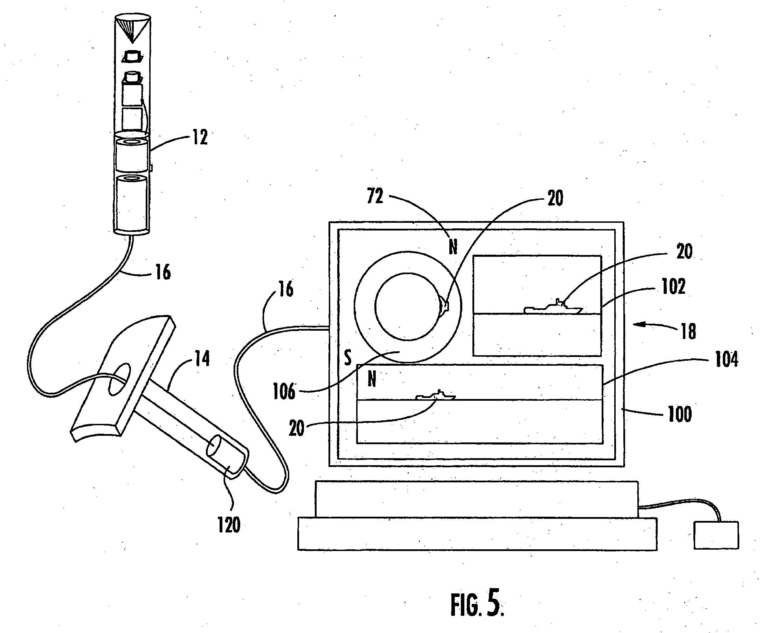

As shown in Figure 5, the workstation station 18 includes a display 100 and image stabilization circuitry for presenting one or more composite images 102, 104 and 106 of the horizon as imaged by the image 56 (e.g. a camera) shown in Figs. 3 and 4 through the conical mirror 52 shown in Fig. 3 or the conical prism 60 shown in Fig. 4, or any other suitable optical element configured to direct a panoramic view of the horizon to the imager 56. The image stabilization circuitry typically includes frame rate image processing software and hardware such as the DataCube (Danvers, MA) MAX PCI board set (INTEL/PCI) which supports frame capture and frame-rate image processing (8x8 convolution, frame averaging and LUT operations). In each image, the ship 20 (see Fig. 2) is shown in a stable fashion even when waves are present on the ocean surface due to the use of pixel mosaic software operating on the work station 18 which stitches together a stable composite image. Compensation of buoy motion artifacts due to waves is also accomplished by capturing still frame images while the buoy 12 is located at the peak of a wave - a feature which further boosts the height of the optical benches 38, 38' shown in Figs. 3 and 4 above the waterline to increase the observable range.

The buoy 12 does not typically include any complex, expensive, and, as in the prior art, ineffective gyro-stabilization optics assemblies. Instead, the workstation 18 shown in Fig. 5 overcomes the affect of wave motion on the video signal output by the camera on the buoy 12.

Moreover, the use of the sensor 70 shown in Figs. 3 and 4, typically a flux gate compass, provides orientation information to the workstation 18 shown in Fig. 5, which determines each contact's bearing measured in the pixel space.

Also shown in Fig. 5 is a spool 120 located in the launcher 14 for paying out the transmission cable 16 as the submarine 10 moves after launching the buoy 12. Although the launcher 14 has been described as a standard three inch launcher and thus the buoy 12 is typically three inches in diameter or less and 4' long, other launchers can be used and/or the launcher 14 can be fitted with a breech door adapter to allow for a longer, 6' long buoy. The spool 92 shown in Figs. 3 and 4 on buoy 12 typically contains over 200' of transmission cable, while the spool 120 shown in Fig. 5 contains up to 1½ miles of transmission cable.

Compared to the prior art attempt to produce a camera type buoy, no gyro-stabilization optics are required on board the buoy 12 shown in Fig. 3 and 4. As such, the optical bench 38 shown in Figs. 3 and 4 is higher above the waterline to capture a panoramic view of the horizon and image stabilization is provided by the workstation 18 shown in Fig. 5. By using optical communications, the transmission cable 16 can be very long as compared to the short copper wire tether proposed in the prior art.

The use of the conical mirror 52 shown in Fig. 3 (or the prism 60 shown in Fig. 4) provides a panoramic view of the horizon without the use of moving components. Referring to Fig. 5, the use of the imaging workstation 18 allows the viewing of the resulting imagery either in raw form (as a toroid) showing the whole of the horizon with "up" at the circumference of the plot as shown at 106 or as processed to present the user with a vertically oriented image to emulate the imagery displayed by existing submarine periscopes as shown at 102 and 104. The use of the imager 56 shown in Figs. 3 and 4 primarily as an image capture device for still frame imagery, uses wave motion as an advantage in gaining height-of-eye (the height of the optical bench 38) above the waterline. Frame rate image processing supported by the reuse of previously developed photonics mast workstation software advantageously resides on the workstation 18.

Once the buoy 12 is on the surface, roughly 2 - 3 feet of the buoy 12 will be exposed. This mimics the typical exposure for existing periscopes when used for an initial safety sweep. The range of detection for trawlers (having a 65 foot mast head height) is in the range of 5 nautical miles. Large surface contacts having a 100 foot mast head height are detectable out to 10 nautical miles.

In this way, the photonic buoy 12 prevents collisions and also the detection of a submarine by enemy ships. Gyro-stabilized optics assemblies are not required for image stabilization and the buoy system still provides the user with an image stabilized panoramic view of the horizon. The long transmission cable tether allows the submarine 10 to manoeuvre freely even when the photonic buoy 12 is deployed and allows the photonic buoy 12 to be deployed even when the submarine 10 is fairly deep below the ocean surface.

A stable composite image representing a panoramic view of the horizon is provided without the use of an expensive gyro-stabilized optics assembly. Instead, the optical bench 38 at the top portion 36 of the buoy 12 includes a vertically oriented imager aimed at a panoramic optical element such as a conical mirror or a conical prism. The buoy 12 rotates, bobs, and moves to and from in the waves but the remote workstation 18 located on board the submarine 10 or elsewhere is configured to compensate for all motion artifacts, to capture still frame images, and to stitch together a stable composite image. The bearing of any detected watercraft is provided by the flux gate compass on the buoy 12.

Although specific features of the invention are shown in some drawings and not in others, this is for convenience only as each feature may be combined with any or all of the other features in accordance with the invention. The words "including", "comprising", "having", and "with" as used herein are to be interpreted broadly and comprehensively and are not limited to any physical interconnection.

## Claims

1. A photonic buoy (12) comprising:
a hull (30) which is divided into a ballast portion (32) for residing below the waterline (34) and a top portion (36) for residing above the waterline (34);
a mass (90) in the ballast portion (32); and
an optical bench (38) in the top portion (36) including:
an optical device (52) configured to provide a panoramic view of the horizon, and
a fixed vertically oriented imager (56) aimed at the optical device (52), and
**characterised in that**;
the hull (30) is an elongate cylindrical hull (30) having a diameter compatible with a launcher of a submarine whereby the photonic buoy is able to be launched from the launcher of the submarine; and
the panoramic view of the horizon provided by the optical device extends above and below horizontal.

2. A photonic buoy (12) according to claim 1 in which the optical device (52) is a conical mirror inside the top portion (36) of the hull (30) surrounded by a transparent wall (54).

3. A photonic buoy (12) according to claim 1 in which the optical device (52) is a conical prism (60) sealed with respect to the top portion (36) of the hull (30).

4. A photonic buoy (12) according to any one of the preceding claims in which the imager (56) includes a CCD camera.

5. A photonic buoy (12) according to any one of the preceding claims in which the imager (56) includes an infrared camera.

6. A photonic buoy (12) according to any one of the preceding claims and further including a sensor (70) in the top portion (36) of the hull (30) for detecting the attitude of the photonic buoy (12).

7. A photonic buoy (12) according to any one of the preceding claims and further including a transmission cable (16) extending from the optical bench (38) for transmitting video signals to a remote location.

8. A photonic buoy (12) according to any one of the preceding claims in which the hull (30) includes a self-scuttling plug (96) therein.

## Patentansprüche

1. Photonische Boje (12), die Folgendes umfasst:
einen Hüllkörper (30), der in einen Ballastabschnitt (32), der unterhalb der Wasserlinie (34) bleiben soll, und einen oberen Abschnitt (36), der oberhalb der Wasserlinie (34) bleiben soll, unterteilt ist;
eine Masse (90) in dem Ballastabschnitt (32); und
eine optische Bühne (38) im oberen Abschnitt (36), die Folgendes enthält:
eine optische Vorrichtung (52), die konfiguriert ist, eine Panoramaansicht des Horizonts bereitzustellen, und
eine feste, vertikal orientierte Bildgebungseinrichtung (56), die auf die optische Vorrichtung (52) gerichtet ist, und
**dadurch gekennzeichnet, dass**:
der Hüllkörper (30) ein lang gestreckter zylindrischer Hüllkörper (30) ist, dessen Durchmesser mit einer Abschussvorrichtung eines Unterseeboots kompatibel ist, wodurch die photonische Boje von der Abschussvorrichtung des Unterseeboots abgeschossen werden kann; und
die Panoramaansicht des Horizonts, die durch die optische Vorrichtung bereitgestellt wird, sich über und unter der Horizontalen erstreckt.

2. Photonische Boje (12) nach Anspruch 1, wobei die optische Vorrichtung (52) ein konischer Spiegel in dem oberen Abschnitt (36) des Hüllkörpers (30) ist, der von einer lichtdurchlässigen Wand (54) umgeben ist.

3. Photonische Boje (12) nach Anspruch 1, wobei die optische Vorrichtung (52) ein konisches Prisma (60) ist, das in Bezug auf den oberen Abschnitt (36) des Hüllkörpers (30) dicht verschlossen ist.

4. Photonische Boje (12) nach einem der vorhergehenden Ansprüche, wobei die Bildgebungseinrichtung (56) eine CCD-Kamera umfasst.

5. Photonische Boje (12) nach einem der vorhergehenden Ansprüche, wobei die Bildgebungseinrichtung (56) eine Infrarotkamera umfasst.

6. Photonische Boje (12) nach einem der vorhergehenden Ansprüche, die ferner einen Sensor (70) im oberen Abschnitt (36) des Hüllkörpers (30) umfasst, um die Lage der photonischen Boje (12) zu detektieren.

7. Photonische Boje (12) nach einem der vorhergehenden Ansprüche, die ferner ein Übertragungskabel (16) umfasst, das sich von der optischen Bühne (38) erstreckt, um Videosignale an einen entfernten Ort zu übertragen.

8. Photonische Boje (12) nach einem der vorhergehenden Ansprüche, wobei in dem Hüllkörper (30) ein selbstversenkender Stopfen (96) vorhanden ist.

## Revendications

1. Bouée photonique (12) comprenant :
une coque (30) qui est divisée en une partie de lest (32) destinée à se trouver en dessous de la ligne de flottaison (34) et une partie supérieure (36) destinée à se trouver au-dessus de la ligne de flottaison (34) ;
une masse (90) dans la partie de lest (32) ; et
un banc optique (38) dans la partie supérieure (36) comportant :
un dispositif optique (52) configuré pour fournir une vue panoramique de l'horizon, et
un imageur fixe orienté verticalement (56) braqué sur le dispositif optique (52), et
**caractérisée en ce que** :
la coque (30) est une coque cylindrique allongée (30) ayant un diamètre compatible avec un lanceur d'un sous-marin, la bouée photonique pouvant être lancée depuis le lanceur du sous-marin ; et
la vue panoramique de l'horizon fournie par le dispositif optique s'étend au-dessus et en dessous de l'horizontale.

2. Bouée photonique (12) selon la revendication 1 dans laquelle le dispositif optique (52) est un miroir conique à l'intérieur de la partie supérieure (36) de la coque (30) entouré par une paroi transparente (54).

3. Bouée photonique (12) selon la revendication 1 dans laquelle le dispositif optique (52) est un prisme conique (60) scellé par rapport à la partie supérieure (36) de la coque (30).

4. Bouée photonique (12) selon l'une quelconque des revendications précédentes dans laquelle l'imageur (56) comporte une caméra CCD.

5. Bouée photonique (12) selon l'une quelconque des revendications précédentes dans laquelle l'imageur (56) comporte une caméra infrarouge.

6. Bouée photonique (12) selon l'une quelconque des revendications précédentes et comportant en outre un capteur (70) dans la partie supérieure (36) de la coque (30) pour détecter l'orientation de la bouée photonique (12).

7. Bouée photonique (12) selon l'une quelconque des revendications précédentes et comportant en outre un câble de transmission (16) s'étendant depuis le banc optique (38) pour transmettre des signaux vidéo à un emplacement distant.

8. Bouée photonique (12) selon l'une quelconque des revendications précédentes dans laquelle la coque (30) renferme un bouchon d'auto-sabordage (96).
